Europäisches Patentamt

European Patent Office

Office européen des brevets

(19)

(11) Publication number: **0 105 461**
**A2**

## (12) EUROPEAN PATENT APPLICATION

(21) Application number: **83109673.0**

(22) Date of filing: **28.09.83**

(51) Int. Cl.³: **G 02 B 5/16**

(30) Priority: **30.09.82 US 429954**

(43) Date of publication of application:
**18.04.84 Bulletin 84/16**

(84) Designated Contracting States:
**AT FR GB NL**

(71) Applicant: **International Standard Electric Corporation
320 Park Avenue
New York New York 10022(US)**

(72) Inventor: **Beecher, Richmond Charles
274 Bullard Street
Holden, MA 01520(US)**

(74) Representative: **Graf, Georg Hugo, Dipl.-Ing. et al,
c/o Standard Elektrik Lorenz AG Patent- und
Lizenzwesen Postfach 300 929 Kurze Strasse 8
D-7000 Stuttgart 30(DE)**

(54) Concentric core optical fiber with crosstalk barrier.

(57) An optical fiber having concentrically arranged cores
(12, 16) for transmitting an optical signal. The cores are
separated by a cladding layer (14) that includes a ring portion
(20) for trapping light and preventing crosstalk between the
cores (16, 18).

FIG. 1.

EP 0 105 461 A2

R.C.Beecher-1

Concentric Core Optical Fiber with
Crosstalk Barrier

This invention relates to an optical fiber as set forth
in the preamble of claim 1.

Concentric core optical fibers include a central or inner
core surrounded by a cladding which, in turn, is surrounded
by a concentric outer core which, in turn, is surrounded
by an outer cladding layer. By properly relating the indicies
of refraction between the different cores and claddings,
both cores can transmit an optical signal via the principles
of internal reflection. Such fibers have found usage, for
example, in military applications wherein the inner core
carries an information signal and the outer core carries
a jamming signal to prevent unauthorized access to the
information signal. An example of such a fiber is disclosed
in DE-OS 26 28 561.

A problem with concentric core fibers is the crosstalk between the cores, that is, the light signal from one core
mixing with the signal from the other core so that the signal in the other core is distorted. Crosstalk occurs as
a result of scattered light which is present due to improper signal injection, microbends in the fiber and/or

ZT/P1-Kg/R
September 26, 1983

R.C.Beecher-1

perturbations in the fiber.

Accordingly, the object of the invention is to provide an optical fiber of the above kind in which such crosstalk is avoided.

This object is attained as set forth in claim 1. Preferred embodiments are given in the subclaims.

The invention will now be explained in more detail, by way of example, with reference to the accompanying drawings, in which:

Figure 1 is a cross-sectional view of an optical fiber in accordance with this invention; and,

Figure 2 is a graphic representation of the variation of the refractive index along the cross-section of the fiber shown in Figure 1.

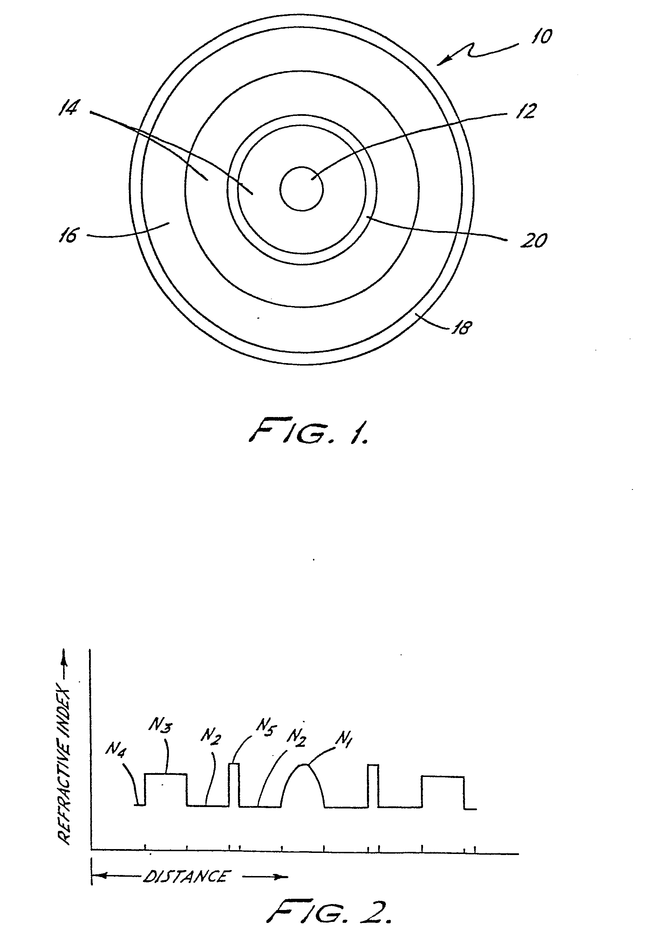

In Figure 1, the optical fiber 10 in accordance with this invention is shown as including an inner core 12 of suitable light transmitting material having an index of refraction $N_1$. Around this core 12 is formed a first cladding layer 14, formed of a suitable material and having an index of refraction $N_2$ which is lower than the index of refraction $N_1$. With the indices of refraction between the core 12 and the cladding layer 14, light can be transmitted along the core 12 by the internal reflection thereof at the interface of the core and the cladding.

Around the cladding layer 14 is formed another or outer core 16 also of suitable light transmitting material. The

R.C.Beecher-1

outer core 16 is generally concentric with respect to the inner core 12 and has an index of refraction $N_3$ which is higher than the index of refraction of the cladding layer 14. Thus, the core 16 is spaced from the inner core 12 by the cladding layer 14.

Around the core 16 is formed another or outer cladding layer 18 formed of a suitable material and having an index of refraction $N_4$ which is lower than that of the index of refraction $N_3$ of the core 16. With $N_3$ being higher than $N_2$ and $N_4$, light can be transmitted along the outer core 16 also by the internal reflection thereof at the interfaces.

In accordance with this invention, the inner cladding layer 14 is formed with a relatively thin concentric ring 20 of light transmitting material having an index of refraction $N_5$ which is higher than the index of refraction of the inner cladding layer 14. With this arrangement, the ring 20 separates between the cores 12 and 16 and forms a barrier therebetween that traps any light refracted from the cores into the cladding layer. Preferably, the index of refraction $N_5$ is at least as high as the index of refraction of the cores 12 and 16. Moreover, the ring 20 should include a material for enabling it to absorb, rather than transmit, the light it traps. By so absorbing the light, it is not discharged at the output end of the fiber 10 and minimizes problems associated with coupling the fiber to a receiver.

As can be seen in Figure 2, the refractive index profile for a particular fiber in accordance with this invention is illustrated. The refractive index profile of the core 12 is the characteristic parabolic profile of a graded

R.C.Beecher-1

index fiber and is shown at $N_1$. The increased index $N_5$ of the ring 20 is outwardly adjacent the parabolic index of the core and outwardly adjacent the index profile of the ring is the index $N_3$ profile of the outer core 16.

In a preferred fiber 10, the cores 12 and 16 are made of a high quality glass such as fused silica or fused silica doped with a suitable material increasing its index of refraction. Such materials are well known in the art and include germania and phosphorus. Similarly, the cladding layers 14 and 18 can be made of fused silica or silica doped with boron or fluorine which elements reduce the index of refraction of the silica. Combinations of variously doped silica layers to provide an optical fiber are well known to those skilled in the art, and a more detailed explanation is not necessary for an understanding of this invention.

The ring 20 is doped to raise its index of refraction, for example, it can be doped with germania. Preferably, the ring additionally is doped with a material that absorbs light at the appropriate wavelength, for example, boron, cobalt or nickel. Such materials should not require irradiation to become absorbent at the desired wavelength.

The fiber 10 can be made in accordance with any conventional manufacturing process. Thus, a modified chemical vapor deposition process (MCVD) or a vapor axial deposition process (VAD) or a rod in tube process can be utilized. If an MCVD process is used, the outer cladding layer 18 could be the substrate tube used in such process or could be surrounded by that tube.

INTERNATIONAL STANDARD ELECTRIC
CORPORATION, NEW YORK


R.C.Beecher-1


## Claims

1. Optical fiber having an inner core (12) for transmitting a light signal and a concentric outer core (16) for transmitting another light signal, said cores being separated from each other by a cladding layer (14) having an index of refraction less than that of said cores, c h a r a c - t e r i z e d in that said cladding layer includes a relatively thin ring (20) for trapping any light transmitted from one core toward the other.

2. An optical fiber as claimed in claim 1, characterized in that said relatively thin ring (20) includes a light absorbing material for absorbing light trapped therein.

3. An optical fiber as claimed in claim 2, characterized in that the index of refraction of said ring (20) is higher than that of said cladding layer (14).

4. An optical fiber as claimed in claim 3, characterized in that the index of refraction of said ring (20) is at least as high as that of said cores (16, 18).

5. An optical fiber as claimed in any of the preceding claims characterized in that said cores (12, 16) and said cladding (14) are made of silica material and that said ring (20)

ZT/P1-Kg/R
September 26, 1983

0105461

R.C.Beecher-1

is doped with light absorbing material.

6.    An optical fiber as claimed in claim 5, characterized in that said ring (20) is doped with an element selected from the group consisting of boron, cobalt and nickel.

7.    An optical fiber as claimed in any of the preceding claims, characterized in that it includes an outer cladding layer (18) surrounding said outer core (16).

FIG. 1.

FIG. 2.

R·C·Beecher 1